Europäisches Patentamt

European Patent Office

Office européen des brevets

(11) Publication number: **0 370 109**
**A1**

# EUROPEAN PATENT APPLICATION
## published in accordance with Art. 158(3) EPC

(21) Application number: 89901605.9

(22) Date of filing: 24.01.89

(86) International application number:
**PCT/JP89/00059**

(87) International publication number:
**WO 89/08072 (08.09.89 89/21)**

(51) Int. Cl.5: **B65H 54/64, B21F 17/00**

(30) Priority: 02.03.88 JP 47608/88

(43) Date of publication of application:
**30.05.90 Bulletin 90/22**

(84) Designated Contracting States:
**BE DE FR GB IT**

(71) Applicant: **NKK CORPORATION**
**1-2, Marunouchi 1-chome Chiyoda-ku**
**Tokyo 100(JP)**

(72) Inventor: **KAWAHARA, Masanori NKK**
**Corporation**
**1-2, Marunouchi 1-chome Chiyoda-ku**
**Tokyo 100(JP)**
Inventor: **ISHIHARA, Toshio NKK Corporation**
**1-2, Marunouchi 1-chome Chiyoda-ku**
**Tokyo 100(JP)**
Inventor: **KATOH, Akihiko NKK Corporation**
**1-2, Marunouchi 1-chome Chiyoda-ku**
**Tokyo 100(JP)**
Inventor: **NAEMURA, Hiroshi NKK Corporation**
**1-2, Marunouchi 1-chome Chiyoda-ku**
**Tokyo 100(JP)**

(74) Representative: **Popp, Eugen, Dr.**
**MEISSNER, BOLTE & PARTNER**
**Widenmayerstrasse 48 Postfach 86 06 24**
**D-8000 München 86(DE)**

(54) **FILAMENT WINDING APPARATUS.**

(57) A filament winding apparatus of the present invention, wherein a plurality of yarn feed ports for delivering rovings towards a mandrel are disposed inside a plane perpendicular to the axis of rotation of the mandrel and allowed to move independently in the direction of the axis of rotation of the mandrel. Therefore, all of the plurality of rovings can be wound at once around the peripheral surface of an FRP container or the like with high productivity but without any slip.

F I G. 1

# S P E C I F I C A T I O N

Filament winding apparatus

Technical Field

The present invention relates to a filament winding apparatus.

Background. Art

It is known to the art to wind a fiber-reinforced resin filament about, for example, an FRP vessel for storing hot water by using a filament winding apparatus, hereinafter referred to as "FW apparatus", so as to improve the durability of the vessel.

The performance of the FW apparatus is improved by, for example, increasing the filament winding speed. For increasing the filament winding speed, it is necessary to rotate a mandrel constituting the FW apparatus at a high speed. If the mandrel is rotated at a high speed, however, the filament fails to be wound tight about, for example, an FRP vessel because of the increased inertia force of the filament caused by the high speed rotation of the mandrel.

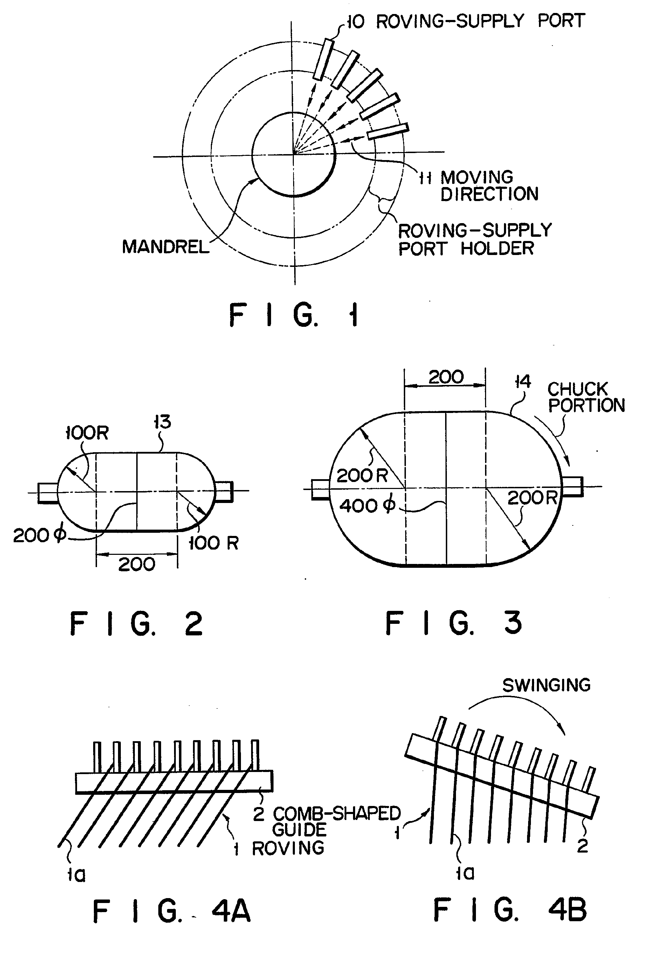

It is also known to the art to increase the number of rovings, i.e., bundle of filaments, for improving the performance of the FW apparatus. In this case, rovings 1 which are simply arranged in the lateral direction are passed through a comb-shaped guide 2, as shown in Fig. 4A, such that each roving 1a is wound about the vessel, not shown, to be treated. In the prior art, the winding state of the roving 1a is controlled by simply inclining the comb-shaped guide 2 in the lateral direction, as shown in Fig. 4B. Naturally, the rovings 1 wound about the vessel are parallel with each other, leading to serious problems.

Specifically, tension is imparted to the rovings 1 when the rovings are wound about the mandrel in the ordinary FW apparatus. This makes it necessary for each roving 1a to extend along the geodesic line, i.e., the line joining two points on the surface of the mandrel with the shortest distance. However, if the comb-shaped guide 2 is inclined as shown in Fig. 4B during the operation of the FW apparatus, only one of the parallel rovings 1 can be made to extend along the geodesic line. In other words, it is unavoidable for the other rovings 1 to deviate from the geodesic line. In addition, the deviant rovings tend to slide along the mandrel. Naturally, the sliding causes the rovings 1 to be wound about the mandrel in undesired directions, with the result that the article wound with the rovings fails to exhibit a desired mechanical strength.

As a matter of fact, the present inventors have conducted an experiment using a ball having a diameter of 200 mm. It has been found that, where a single roving 1a deviates from the geodesic line by 15 mm or less, sliding of the rovings 1 does not take place. If the deviation reaches 18 mm, however, a slight sliding takes place in the rovings 1. Further, it has been confirmed that, if the deviation is as much as 21 mm or more, sliding of the rovings 1 is so much that it is impossible to wind the rovings about the mandrel.

An additional experiment has been conducted by the present inventors using 8 rovings. In this experiment, the geodesic line was aligned with the center of the 8 rovings. The four central rovings were found not to slide; the two rovings at the both ends were found to slide so much that it was impossible to wind these rovings; and the remaining two rovings were found to slide slightly.

Disclosure of the Invention

The present invention, which has been achieved in view of the situation described above, provides a filament winding apparatus (FW apparatus) which permits preventing all of a plurality of rovings from being slid so as to markedly improve the productivity.

According to the present invention, there is provided a filament winding apparatus, comprising a mandrel receiving rovings each formed of bundled filaments; a plurality of roving-supply ports arranged in a plane perpendicular to the rotation axis of the mandrel and independently movable within said plane toward and away from the axis of the mandrel; and a plurality of rovings supplied from the roving-supply ports to the mandrel.

. It is desirable for each of the roving-supply ports to be independently movable in the axial direction of the mandrel interlockingly with the movement of the mandrel in the circumferential and axial directions.

Also, it is desirable for each of the roving-supply ports to be positioned in a predetermined point in the axial direction of the mandrel. Further, it is desirable to supply the rovings while allowing the movement of the roving-supply ports in the axial direction of the mandrel to be interlocked with the rotation of the mandrel.

In the present invention, all the rovings are prevented from being slid so as to permit the plural rovings to be wound simultaneously about the curved surface of the mandrel, as follows. Specifically, a plurality of roving-supply ports 10 are mounted at the holder portion of the roving-supply ports, as shown in Fig. 1. In the present invention, these supply ports 10 are arranged in a plane perpendicular to the rotation axis of the mandrel and are independently movable within said plane toward and away from the axis of the mandrel, as denoted by arrows 11 in Fig. 1. It should also be noted that each roving-supply port 10 is of comb shape such that at most four rovings can be supplied through each port 10. Also, the comb-shaped portion is provided with a bearing portion so as to permit swinging of the roving-supply port.

The particular constructions described above permit the roving or the center of a group of rovings coming out the roving-supply port 10 to run along the geodesic line on the mandrel for the winding of the rovings about the mandrel.

Brief Description of the Drawings

Fig. 1 illustrates the construction in the gist portion of a filament winding apparatus according to one embodiment of the present invention; Figs. 2 and 3 are for explanation of examples of the present invention; and Fig. 4 illustrates the problem inherent in the conventional filament winding apparatus.

Best Mode of Wording the Invention

Some Examples of the present invention are as follows.

Example 1

A filament winding was performed by using an FW apparatus of the present invention constructed as shown in Fig. 1. The FW apparatus was provided with 3 roving-supply ports 10 each capable of supplying 4 rovings, and these 12 rovings were wound about a mandrel 13 comprising a central cylindrical portion and hemispherical end portions at both ends as shown in Fig. 2. The radius in each of these central cylindrical portion and hemispherical end portions was 100R. Also, the length in the axial direction of the central cylindrical portion was 200.

In this experiment, the position of the roving-supply port 10 was automatically controlled in accordance with the angle of rotation of the mandrel and the moving distance of the roving-supply port to and away from the axis of the mandrel. The rovings were wound satisfactorily about the mandrel without bringing about the sliding along the surface of the mandrel.

For comparison, a similar experiment was conducted by using a conventional FW apparatus as shown in Fig. 4. Where 6 or more rovings were arranged in parallel, the rovings slid so severely that it was impossible to wind the rovings about the mandrel. In the FW apparatus of the present invention, however, the winding operation was finished in about 60 minutes in the case where the FW apparatus was provided with a single roving-supply port 10 capable of supplying 4 rovings to the mandrel, and in about 21 minutes in the case where the FW apparatus was provided with three roving-supply ports 10 each capable of supplying 4 rovings to the mandrel.

Example 2

A filament winding was performed by using an FW apparatus of the present invention constructed as shown in Fig. 1. The FW apparatus was provided with 3 roving-supply ports 10 each capable of supplying 4 rovings, and these 12 rovings were wound about a mandrel 14 comprising a central cylindrical portion and hemispherical end portions at both ends as shown in Fig. 3. The radius in each of these central cylindrical portion and hemispherical end portions was 200R. Also, the length in the axial direction of the central cylindrical portion was 200.

In this experiment, the position of the roving-supply port 10 in the radial direction of the mandrel was set in advance to conform with the shape of the mandrel 14. Then, the mandrel was rotated while inhibiting the movement of the roving-supply port 10 in the radial direction of the mandrel. Under this condition, the movement of the roving-supply port 10 in the axial direction of the mandrel was automatically controlled so as to wind the rovings about the mandrel without giving rise to the sliding problem. In this case, the position of each roving-supply port 10 within a plane perpendicular to the axis of the mandrel, said position being represented by the distances from the axis of the mandrel in the vertical direction Y and the horizontal direction X, was found to be:

First Roving-Supply Port $(X_1, Y_1) = (350 \text{ mm}, 0 \text{ mm})$

Second Roving-Supply Port $(X_2, Y_2) = (295 \text{ mm}, 190 \text{ mm})$

Third Roving-Supply Port $(X_3, Y_3) = (145 \text{ mm}, 340 \text{ mm})$

In Example 2, in which the roving-supply port 10 was held stationary in the radial direction of the mandrel, the rovings were wound satisfactorily about the mandrel without giving rise to sliding of the rovings along the surface of the mandrel.

In Example 2, the winding operation was finished in about 238 minutes in the case where the FW apparatus was provided with a single roving-supply port 10 capable of supplying 4 rovings to the mandrel, and in about 84 minutes in the case where the FW apparatus was provided with three roving-supply ports 10 each capable of supplying 4 rovings to the mandrel.

Applicability in the Industry

The FW apparatus of the present invention permits simultaneously winding a plurality of rovings about a mandrel without giving rise to the sliding of the rovings along the surface of the mandrel. This makes it possible to increase the number of rovings handled by the FW apparatus by simply enlarging the mounting space of the roving-supply ports. It follows that the operation of winding rovings about, for example, an FRP vessel can be markedly improved by the FW apparatus of the present invention.

Claims:

1. A filament winding apparatus, comprising:
a mandrel receiving rovings each formed of bundled filaments;
a plurality of roving-supply ports arranged in a plane perpendicular to the rotation axis of the mandrel and independently movable within said plane toward and away from the axis of the mandrel;
and a plurality of rovings supplied from the roving-supply ports to the mandrel.

2. The filament winding apparatus as claimed in claim 1, wherein each of the roving-supply ports is interlocked with the movement of the mandrel in the circumferential direction and axial direction.

3. The filament winding apparatus as claimed in claim 1, wherein each of the roving-supply ports is ·independently movable in the axial direction of the mandrel.

4. The filament winding apparatus as claimed in claim 1, wherein each of the roving-supply ports is interlocked with the movement of the mandrel in the circumferential direction and axial direction and is independently movable in the axial direction of the mandrel.

5. The filament winding apparatus as claimed in claim 1, wherein each of the roving-supply ports is set at a predetermined position in the axial direction of the mandrel, and the rovings are supplied to the mandrel while interlocking the movement of the roving-supply ports in the radial direction of the mandrel with the rotation of the mandrel.

10 ROVING-SUPPLY PORT

11 MOVING DIRECTION

ROVING-SUPPLY PORT HOLDER

MANDREL

## F I G. 1

100R

13

200 φ

100 R

200

## F I G. 2

200

14 CHUCK PORTION

200 R

400 φ

200 R

## F I G. 3

SWINGING

2 COMB-SHAPED GUIDE

ROVING

1a

## F I G. 4A

1

1a

2

## F I G. 4B

# INTERNATIONAL SEARCH REPORT

International Application No  PCT/JP 89/00059

**I. CLASSIFICATION OF SUBJECT MATTER** (if several classification symbols apply, indicate all) ⁶

According to International Patent Classification (IPC) or to both National Classification and IPC

Int.Cl⁴   B65H54/64, B21F17/00

**II. FIELDS SEARCHED**

| Minimum Documentation Searched ⁷ | |
|---|---|
| Classification System | Classification Symbols |
| IPC | B65H54/64, B65H54/66, B21F17/00 |

Documentation Searched other than Minimum Documentation
to the Extent that such Documents are Included in the Fields Searched ⁸

| | |
|---|---|
| Jitsuyo Shinan Koho | 1926 – 1989 |
| Kokai Jitsuyo Shinan Koho | 1971 – 1989 |

**III. DOCUMENTS CONSIDERED TO BE RELEVANT ⁹**

| Category * | Citation of Document, ¹¹ with indication, where appropriate, of the relevant passages ¹² | Relevant to Claim No. ¹³ |
|---|---|---|
| A | JP, A, 56-145072 (Messerschmitt-Bölkow-Blohm G.m.b.H.) 11 November 1981 (11. 11. 81) &DE, C3, 3010018 | 1 – 5 |
| A | JP, A, 50-128771 (Kawasaki Heavy Industries, Ltd.) 30 March 1975 (30. 03. 75) (Family: none) | 1 – 5 |

* Special categories of cited documents: ¹⁰

"A" document defining the general state of the art which is not considered to be of particular relevance

"E" earlier document but published on or after the international filing date

"L" document which may throw doubts on priority claim(s) or which is cited· to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| February 2, 1989 (02. 02. 89) | February 13, 1989 (13. 02. 89) |
| International Searching Authority    ~ | Signature of Authorized Officer |
| Japanese Patent Office | |

Form PCT/ISA/210 (second sheet) (January 1985)